**Europäisches Patentamt**

**European Patent Office**

**Office européen des brevets**

(19)

(11) Veröffentlichungsnummer: **0 289 783 B2**

(12)

# NEUE EUROPÄISCHE PATENTSCHRIFT

(45) Veröffentlichungstag der neue Patentschrift:
**31.08.94**

(51) Int. Cl.5: **E04F 17/02**, F16L 55/16

(21) Anmeldenummer: **88105254.2**

(22) Anmeldetag: **31.03.88**

(54) **Montagesystem für den Einbau eines Abgasrohrsystems in einen Kamin.**

(30) Priorität: **02.05.87 DE 3714750**

(43) Veröffentlichungstag der Anmeldung:
**09.11.88 Patentblatt 88/45**

(45) Bekanntmachung des Hinweises auf die
Patenterteilung:
**26.02.92 Patentblatt 92/09**

(45) Bekanntmachung des Hinweises auf die
Entsheidung über den Einspruch:
**31.08.94 Patentblatt 94/35**

(84) Benannte Vertragsstaaten:
**AT BE CH FR GB IT LI NL SE**

(56) Entgegenhaltungen:
| | |
|---|---|
| AT-A- 174 199 | DE-A- 2 121 343 |
| DE-A- 2 424 654 | DE-A- 2 907 071 |
| DE-B- 1 299 399 | DE-C- 1 172 831 |
| DE-U- 8 600 620 | |

(73) Patentinhaber: **Schott-Rohrglas GmbH
Theodor-Schmidt-Strasse 25
D-95448 Bayreuth (DE)**

(72) Erfinder: **Männl, Reinhard
Kohllohstrasse 41
D-8596 Mitterteich (DE)**
Erfinder: **Reuter, Walter
Fritz-Seebach-Strasse 28
D-8596 Mitterteich (DE)**

(74) Vertreter: **Dr. Fuchs, Dr. Luderschmidt Dr.
Mehler, Dipl.-Ing Weiss Patentanwälte
Postfach 46 60
D-65036 Wiesbaden (DE)**

**EP 0 289 783 B2**

Rank Xerox (UK) Business Services
(3.10/3.09/3.3.3)

**Beschreibung**

Die Erfindung betrifft ein Montagesystem für den Einbau eines Abgasrohrsystems aus Glas, Keramik, Edelstahl oder Kunststoff in einen bestehenden Kamin.

In den letzten Jahren wurden verstärkte Anstrengungen unternommen, um einerseits den Wirkungsgrad der Heizkessel zu erhöhen und um andererseits die Umweltbelastung durch die Rauchgase zu verringern.

Zur Senkung des Energieverbrauchs wurden die sogenannten Niedertemperatur- und Tieftemperaturkessel sowie die sogenannten Brennwertkessel entwickelt.

Beim Einsatz dieser neuartigen Heizkessel hat sich jedoch gezeigt, daß die konventionellen Schornsteine wegen des hohen Wasser- und Dampfanfalls und der erhöhten Dichtigkeitsanforderungen ungeeignet sind.

Wenn die Wasserdampftaupunkttemperatur innerhalb des Schornsteins unterschritten wird, fällt Kondensat aus, was zu Versottungen führen kann.

Hierzu wurde vorgeschlagen, die Kamine auszukleiden oder in diese Kamine ein Abgasrohrsystem einzusetzen, das aus einem Material besteht, das resistent gegen das Kondensat ist. Am vorteilhaftesten sind Glasrohre; es werden aber auch Keramik-, Edelstahl- oder Kunststoffrohre eingebaut.

Bisher ist jedoch die Montage dieser Abgasrohre noch nicht zufriedenstellend gelöst.

Es ist bekannt, daß an Edelstahlrohre Laschen angeschweißt sind, in die dann Seile eingehängt werden. Diese Rohre werden dann wie beim Bergsteigen von zwei Personen abgeseilt.

Nachteilig ist, daß Rohre mit größeren Durchmessern wegen des großen Gewichts nur von mehreren Personen eingebracht werden können. Nach dem Absenken und Aufsetzen auf die bereits eingebauten Rohre gibt es Schwierigkeiten beim Aushängen der Seile. Die endgültige Befestigung geschieht im Kaminfuß mit zusätzlich von unten zugeführten Teilen.

Bei der Montage von Keramikrohren sind mehrere Klauensysteme bekannt. Es wird ein Absenkgestänge verwendet, das durch das Rohr geführt und durch Reibung im Rohr gesperrt wird. Das Rohr wird anschließend abgesenkt und dabei zentrieren die Sperrklinken das abzusenkende Rohr über dem darunterliegenden. Das Absenkgestänge wird nach oben herausgezogen und das nächste Rohrteil wird auf die gleiche Weise abgesenkt und aufgesteckt.

Da Rohrteil für Rohrteil abgesenkt, im Kamin aufgesteckt und zentriert werden muß, ist die Montage sehr zeitaufwendig.

Ein gattungsgemäßes Montagesystem ist beispielsweise aus der DE-A-2424654 bekannt. Allerdings ist bei einer dort beschriebenen Ausführungsform die Anordnung der Seiltrommeln und der Umlenkrollen so, daß es leicht zum Kippen oder Verkanten des herabzulassenden Abgasrohrsystemes kommen kann. Benutzt man einen Flaschenzug nach der zweiten dort gezeigten Ausführungsform, der am obersten Rohr- oder Steinabschnitt angreift, so ist die Füllarbeit durch wechselndes Heben oder Senken des Abgasrohrsystems sehr zeitraubend. Bei beiden dort gezeigten Ausführungsformen werden für den Füllvorgang des Kamins eine Vielzahl von vertikalen Streben benötigt, die über die gesamte Rohrlänge angeordnet werden müssen, wodurch der Füllvorgang material- und zeitaufwendig wird. Gleichermaßen ist auch die Zentrierung des abgesenkten Systems aus Rohren oder Formsteinen unzureichend.

Ziel der vorliegenden Erfindung ist daher ein Montagesystem, das diese Nachteile vermeidet, so daß das Abgasrohrsystem nur von einer Person leicht zu montieren ist, wobei es aber auch möglich sein soll, das Abgasrohrsystem wieder auf einfache Weise zu demontieren.

Dieses Ziel wird mit einem Montagesystem gemäß dem Anspruch 1 erreicht. Vorteilhafte Weiterbildungen sind in den Ansprüchen 2 bis 10 angegeben.

Das erfindungsgemäße Montagesystem weist im wesentlichen drei Bestandteile auf: nämlich eine Hub- und Senkvorrichtung mit der die Abgasrohre abgesenkt werden, einen Halterahmen, in dem der erste oder unterste Rohrabschnitt eingehängt ist sowie einen Ständer, der auf dem Kaminboden oder Kaminfuß steht und auf den der Halterahmen aufsetzbar und damit auch zentrierbar ist.

Diese Hub- und Senkvorrichtung weist eine Grundplatte auf, die nicht viel größer ist als die Querschnittsfläche eines üblichen Hauskamins. Auf dieser Grundplatte sind ein Rahmen, an dem mindestens eine Trommel befestigt ist, sowie zwei Umlenkrollen montiert.

Diese Trommeln dienen zum Auf- und Abwickeln von Seilen oder Gurten, mit denen das Abgasrohrsystem durch die Öffnung in der Grundplatte in den Kamin abgesenkt wird. Bei Verwendung von nur einer Trommel ist diese derart aufgebaut, daß zwei Seile parallel laufend auf- und abgewickelt werden können. Hierzu wird noch zusätzlich eine Seilführung verwendet. Vorzugsweise ist bzw. sind diese Trommel(n) von Hand betätigbar und weist/weisen eine Sperrklinke auf.

Damit nur eine von zwei Trommel über gegebenenfalls eine Handkurbel betätigt werden braucht, ist diese Trommel mit der zweiten gekoppelt, was über einen geeigneten Antriebsriemen erfolgen kann.

Diese Hub- und Senkvorrichtung kann wegen des geringen Gewichts (ca. 20 kg) und der kleinen Baugröße von nur einer Person durch jede Dachluke transportiert werden.

Der Halterahmen des erfindungsgemäßen Montagesystems weist eine Grundplatte und einen davon beabstandeten Haltering auf, die durch zwei Stege miteinander verbunden sind. Der Halterahmen ist dabei so konstruiert, daß eine Sanierung engster Kaminquerschnitte bei möglichst großem Rohrquerschnitt möglich ist. Dementsprechend ragt die Grundplatte nur soweit über den Rohrquerschnitt hinaus, damit die Stege und die Befestigungsmittel der Seile oder Gurte außen am Rohr vorbei geführt werden können.

Der Innendurchmesser des Halterings entspricht etwa dem Außendurchmesser des Rohrs. Der erste Rohrabschnitt weist an seiner Außenfläche im Abstand vom Rohrende vorzugsweise einen umlaufenden Wulst oder Bördel auf, der durch Stauchen, Rollen, Gießen, Prägen usw. hergestellt sein kann.

Mit diesem Wulst oder Bördel liegt dieser erste Rohrabschnitt auf diesem Haltering auf. Bei Glasrohren ist vorzugsweise zwischen dem Bördel oder dem Wulst und dem Haltering ein O-Ring, z.B. aus Silikonkautschuk oder PTFE zur elastischen Abpolsterung angeordnet.

Anstatt eines Bördels kann um den ersten Rohrabschnitt auch eine geeignete Stahlschelle gelegt und befestigt werden, die dann auf dem Haltering aufliegt.

Der Halterahmen ist über Zugschrauben, die an der Grundplatte befestigt sind, mit den Seilen oder Gurten verbunden.

An der Grundplatte befindet sich ein sich nach unten erstreckender Bolzen, der in den auf dem Kaminboden stehenden Ständer einsetzbar ist. Dieser Ständer besteht aus einem Fuß und einem in der Mitte angeordneten Rohrstück, in das der Bolzen einrastet.

Der Abstand und die Anordnung der Stege ebenso wie die Länge der Stege sind so gewählt, daß nach dem Aufsetzen des Halterahmens auf dem Ständer durch die am Kaminfuß befindliche Montageöffnung ein Rohrbogen oder ein T-Stück an diesen ersten Rohrabschnitt angesetzt werden kann, so daß die Verbindung des Rohrsystems mit dem Heizkessel hergestellt werden kann.

Der Halterahmen ist gleichzeitig Montagehalterung und endgültige Abstützung des Rohrsystems im Kaminfuß und verbleibt in diesem. Darüber hinaus ermöglicht er aber auch wieder die Demontage des Rohrsystems.

Der Einbau des Abgasrohrsystems mit Hilfe des erfindungsgemäßen Montagesystems wird nachfolgend beschrieben.

Zunächst wird die Hub- und Senkvorrichtung auf dem Kaminkopf aufgesetzt. Danach wird der Halterahmen mit den beiden Seilen oder Gurten mittels zweier Zugschrauben, die an der Grundplatte des Halterahmens mit Hilfe von Flügelmuttern befestigt sind, verbunden. Der Halterahmen wird etwas in den Kamin durch Betätigen der Handkurbel der Trommel abgesenkt. Durch die Sperrklinke an der Trommel wird der Halterahmen in dieser Position fixiert. Anschließend wird der erste, mit dem Bördel oder Wulst versehene Rohrabschnitt in den Halterahmen eingesetzt, so daß der Wulst auf dem Halterahmen aufliegt. Gegebenenfalls wird noch ein O-Ring dazwischen gelegt.

Sodann wird der Halterahmen weiter abgesenkt und in seiner neuen Position wieder fixiert. Ein zweites Rohrstück wird auf dieses erste aufgesetzt, bei Glasrohren gegebenenfalls unter Zwischenschaltung einer elastischen Dichtung, und mittels einer geeigneten Schelle an diesem ersten Rohrstück befestigt.

Der Halterahmen mit diesen beiden Rohrstükken wird wieder etwas abgesenkt und das nächste Rohrstück aufgesetzt. Dies wird so lange fortgeführt, bis der Halterahmen den Kaminboden erreicht, wo vorher bereits durch die Montageöffnung der Ständer eingesetzt worden ist. Der Halterahmen rastet in den Ständer ein, die Flügelmuttern werden entfernt und die Zugschrauben durch Aufwickeln der Seile oder Gurte nach oben abgezogen.

Anschließend wird durch die Montageöffnung am Kaminfuß ein T-Stück oder ein Rohrbogen angesetzt. Am Kaminkopf wird die Hub- und Senkvorrichtung demontiert und zur Fixierung des Rohrsystems wird ein Abdeck- und Fixierelement, das an den Durchmesser des Rohres angepaßt ist, aufgesetzt. Dieses Abdeckelement kann aus Kunststoff, Kupfer, Stahlblech oder Aluminium gefertigt sein. Durch geeignete Distanzstücke zwischen Kaminkopf und Abdeckelement wird eine Hinterlüftung des verbleibenden Schachtes gewährleistet. Mit Dübel und Schrauben wird das Abdeckelement am Kaminkopf befestigt.

Soll das ganze Rohrsystem wieder demontiert werden, so wird dieses Abdeckelement wieder entfernt und die Hub- und Senkvorrichtung auf dem Kaminkopf installiert. Am Kaminfuß wird der Rohrbogen oder das T-Stück entfernt und die Seile oder Gurte mit den Zugschrauben werden bis zum Halterahmen abgesenkt. Dort werden die Zugschrauben mit den Flügelmuttern wieder an der Grundplatte des Halterahmens befestigt und das gesamte Rohrsystem wird nach oben gezogen, wo die einzelnen Rohrstücke abgenommen werden.

Der Vorteil dieses Montagesystems besteht darin, daß der Einbau und Ausbau des Rohrsystems von nur einer Person vorgenommen werden kann.

Nachfolgend werden beispielhafte Ausführungsformen der Erfindung unter Hinweis auf die Zeichnungen näher erläutert.

Es zeigen:

Figur 1 einen Längsschnitt durch einen Kamin mit dem erfindungsgemäßen Montagesystem

Figur 2 eine Seitenansicht des Halterahmens mit erstem Rohrabschnitt

Figur 3 einen Querschnitt durch den Halterahmen mit erstem Rohrabschnitt

Figur 4 einen Längsschnitt durch Halterahmen und ersten Rohrabschnitt mit angesetztem Rohrbogen längs der Linie A-B in Figur 3

Figur 5 eine Ansicht eines Kamins mit fertig eingebautem Rohrsystem.

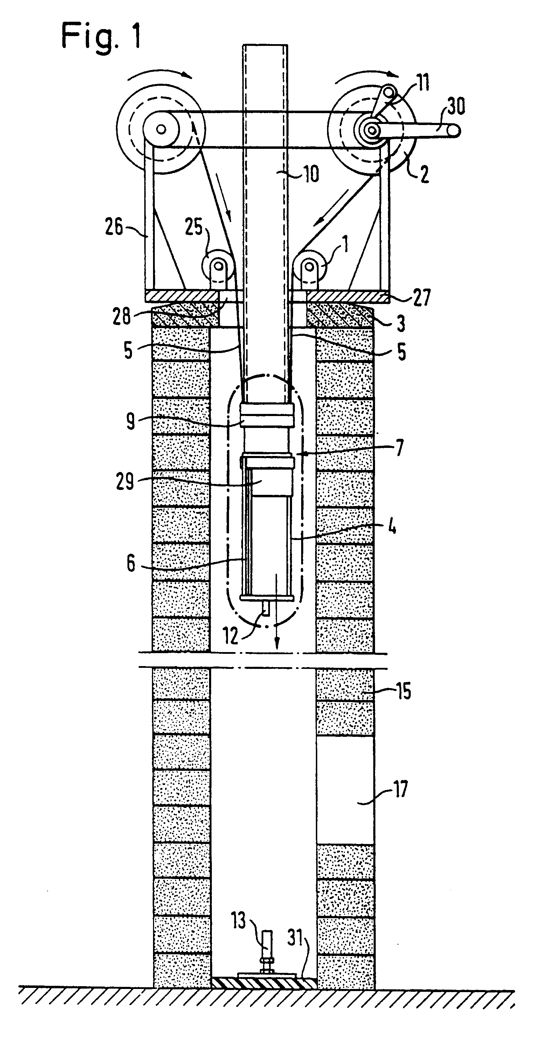

Figur 1 zeigt einen Kamin 15, auf dessen Kopf 3 eine Hub-und Senkvorrichtung 1 aufgesetzt ist. Diese Vorrichtung 1 besteht aus einer Grundplatte 27, die in der Mitte eine Öffnung 28 besitzt, durch die die Abgasrohre 10 in den Kamin 15 eingeführt werden. Auf der Grundplatte 27 sind zwei Umlenkrollen 25 sowie ein Rahmen 26 befestigt. An diesem Rahmen 26 sind zwei Seiltrommeln 2 befestigt, die über einen Antriebsriemen 24 derart miteinander gekoppelt sind, daß nur eine Seiltrommel 2 über die Handkurbel 30 betätigt werden muß. Damit die Rohre 10 im Kamin 15 in der Höhe festgehalten werden können, ist eine Sperrklinke 11 vorgesehen.

Die Seile 5 sind über Zugschrauben 6 mit dem Halterahmen 4 verbunden, der - wie in Figur 1 dargestellt ist - den ersten Rohrabschnitt 29 sowie einen weiteren Rohrabschnitt 10 trägt. Beide Rohrabschnitte sind mit einer Schelle 9 verbunden.

Auf dem Kaminboden 31 befindet sich ein Ständer 13, der durch die Montageöffnung 17 eingesetzt wurde. Auf diesen Ständer wird der Halterahmen mit seinem Bolzen 12 aufgesetzt`

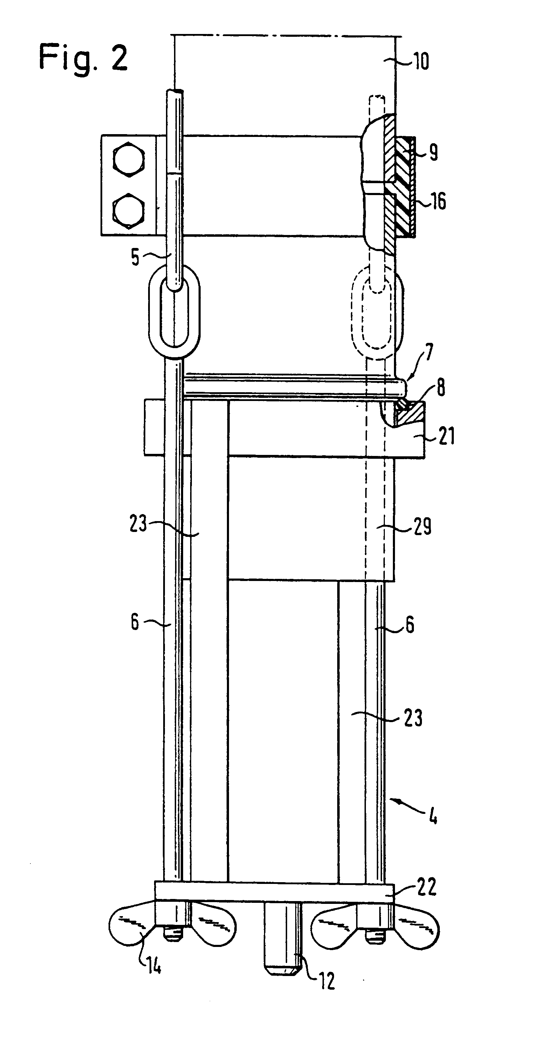

Der strichpunktierte Bereich in Fig. 1, der im wesentlichen den Halterahmen 4 beinhaltet, ist in Figur 2 detaillierter dargestellt.

Der Halterahmen 4 besteht aus einer Grundplatte 22, an dessen Unterseite in der Mitte ein Bolzen 12 angesetzt ist. Diese Grundplatte 23 ist über Zugschrauben 6, die mit Flügelmuttern 14 befestigt sind, mit den Seilen 5 verbunden.

Außerdem trägt diese Grundplatte 22 zwei Stege 23, an deren oberem Ende ein Haltering 21 befestigt ist, auf dem der erste Rohrabschnitt 29 mit seinem Bördel 7 aufliegt, der mit Zug beansprucht wird. Werden Glasrohre verwendet, wird zusätzlich noch ein O-Ring 8 dazwischen gelegt.

Auf dem ersten Rohrabschnitt 29 ist mit Hilfe einer Dichtung 9 und einer Schelle 16 ein weiterer Rohrabschnitt 10 befestigt.

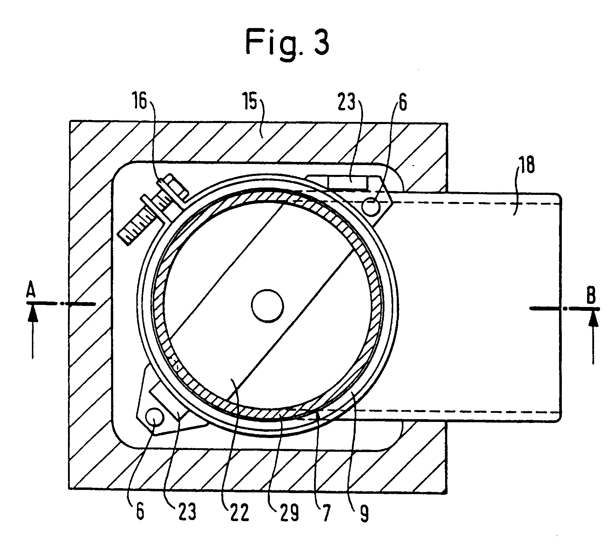

In der Figur 3 ist der Kamin 15 sowie der Halterahmen 4 mit Rohren 29 und 18 im Schnitt dargestellt. Man erkennt, daß die Grundplatte 22 ein Metallstreifen ist, der lediglich um so viel länger als der Durchmesser der Rohre ist, daß an seinen Enden die Stege 23 sowie die Zugschrauben 6 angebracht werden können.

Der Halterahmen 4 ist bezüglich des Kaminquerschnitts so angeordnet, daß sich die Zugschrauben 6 und die Stege 23 in den diagonal gegenüberliegenden Ecken befinden. Durch diese platzsparende Anordnung ist es möglich, auch in kleinen Kaminquerschnitten Rohre mit möglichst großem Durchmesser einzubauen. Auch ermöglicht die gezeigte Stellung der Stege 23 den Anschluß eines Rohrbogens 18 an den ersten Rohrabschnitt 29.

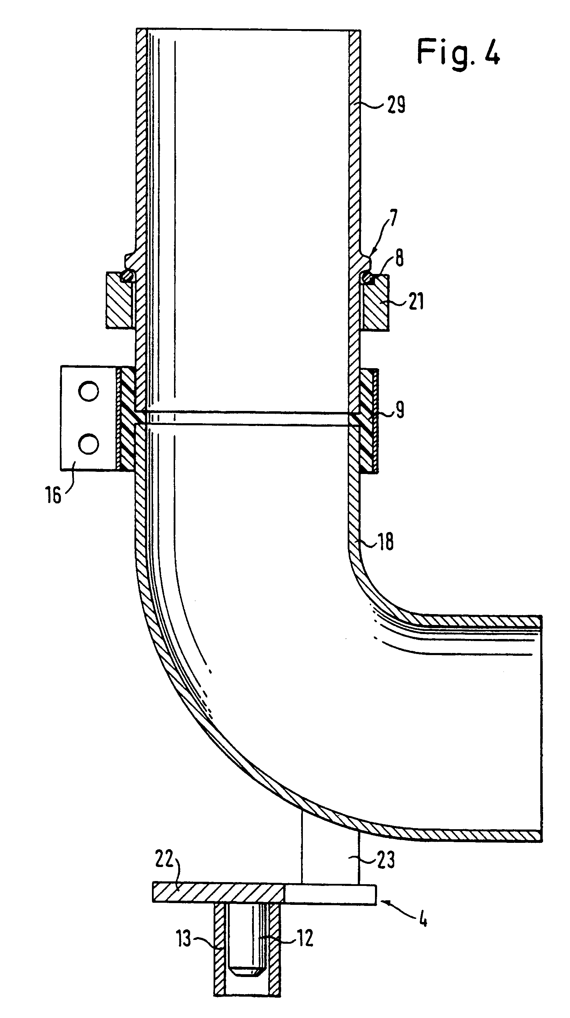

Diese Rohranordnung ist in Figur 4 noch einmal im Schnitt dargestellt. Weiterhin ist gezeigt, wie der Bolzen 12 in den Ständer 13 eingreift.

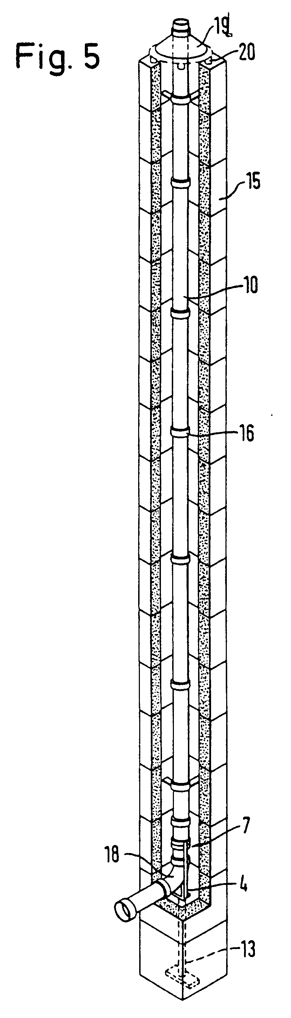

Figur 5 zeigt das vollständige, in den Kamin 15 eingebaute Rohrsystem mit dem im Kamin verbleibenden Halterahmen 4 und dem Ständer 13. Am Kaminkopf 3 wird das gesamte Rohrsystem mittels eines Abdeckelements 19 und Distanzstücken 20 fixiert, die auf dem Kaminkopf 3 festgedübelt sind.

Am Rohrbogen 18 ist ein weiteres Rohrstück 10 angesetzt, das zum Heizkessel (nicht dargestellt) führt.

**Patentansprüche**

1. Montagesystem für den Einbau und Ausbau eines Abgasrohrsystems aus Glas, Keramik, Edelstahl oder Kunststoff in einem bestehenden Kamin, mit einer auf den Kaminkopf aufsetzbaren Hub- und Senkvorrichtung (1) für die Abgasrohre und einem über Befestigungsmittel (6) mit der Hub- und Senkvorrichtung verbundenen Halterahmen (4), wobie die Hub- und Senkvorrichtung eine mit einer zentralen Öffnung versehene Grundplatte aufweist, auf der Grundplatte (27) mittels eines Rahmens (26) mindestens eine Trommel (2) zum Auf- und Abwickeln von Seilen oder Gurten (5) sowie zwei Umlenkrollen (25) befestigt sind, dadurch gekennzeichnet,
   - daß die Umlenkrollen (25) auf räumlich voneinander versetzten und parallel verlaufenden Achsen gelagert sind,
   - daß das Montagesystem einen in den Kaminboden (31) einsetzbaren Ständer (13) aufweist, auf den der Halterahmen (4) lösbar aufsetzbar und zentrierbar ist, und
   - daß der im Kamin verbleibende Halterahmen (4) so zum Halten des ersten unteren Rohrabschnitts (29) angeordnet ist, daß der Rohrabschnitt (29) im vertikalen Abstand zum Ständer (13) gehalten wird.

2. Montagesystem nach Anspruch 1 , dadurch gekennzeichnet, daß diese Seiltrommeln (2) von Hand betätigbar sind.

3. Montagesystem nach Anspruch 1 , dadurch gekennzeichnet, daß diese Seiltrommeln (2) bezüglich ihrer Drehrichtung miteinander gekoppelt sind.

4. Montagesystem nach einem der Ansprüche 1 bis 3 , dadurch gekennzeichnet, daß dieser Halterahmen (4) eine Grundplatte (22) aufweist, an der zwei parallel gegenüberliegende, sich nach oben erstreckende Stege (23) befestigt sind, die einen Haltering (21) tragen, auf dem dieser erste Rohrabschnitt (29) aufliegt.

5. Montagesystem nach Anspruch 4 , dadurch gekennzeichnet, daß dieser erste Rohrabschnitt (29) einen auf seiner Außenfläche umlaufenden Wulst oder Bördel (7) aufweist, mit dem dieser erste Rohrabschnitt (29) auf diesem Haltering (21) aufliegt.

6. Montagesystem nach Anspruch 5 , dadurch gekennzeichnet, daß zwischen diesem Wulst (7) und diesem Haltering (21) ein O-Ring (8) angeordnet ist.

7. Montagesystem nach Anspruch 4 , dadurch gekennzeichnet, daß an diesem ersten Rohrabschnitt (29) eine Schelle befestigt ist, mit der dieser erste Rohrabschnitt auf diesem Haltering (21) aufliegt.

8. Montagesystem nach einem der Ansprüche 4 bis 7, dadurch gekennzeichnet, daß sowohl diese Stege (23) als auch diese Grundplatte (27) und dieser Haltering (21) derart beabstandet sind, daß an das untere Ende dieses ersten Rohrabschnitts (29) ein Rohrbogen (18) oder ein T-Rohrstück ansetzbar ist.

9. Montagesystem nach einem der Ansprüche 4 bis 8 , dadurch gekennzeichnet, daß an dieser Grundplatte (22) ein Bolzen (12) angeordnet ist, der in den Ständer (13) eingreift.

10. Montagesystem nach einem der Ansprüche 4 bis 9 , dadurch gekennzeichnet, daß diese Befestigungsmittel zwischen Halterahmen (4) und Hub- und Senkvorrichtung (1) Zugschrauben (6) sind, die mit den Seilen oder Gurten (5) verbunden sind.

**Claims**

1. Assembly system for installing and dismantling a flue gas pipe system made of glass, ceramics, high-grade steel or plastics in an existing chimney, having for the flue gas pipes a raising and lowering device (1) which may be mounted on the chimney top, and having a holding frame (4) connected by way of securing means (6) to the raising and lowering device, the raising and lowering device having a base plate provided with a central opening and there being secured on the base plate (27) by means of a frame (26) at least one drum (2) for winding cables or belts (5) up and down and two deflection rollers (25), characterized in that the deflection rollers (25) are mounted on axes which are spatially offset from one another and which run parallel, in that the assembly system has a stand (13) which may be set in the chimney base (31) and on which the holding frame (4) may be detachably mounted and centred, and in that the holding frame (4) remaining in the chimney is arranged in such a way as to hold the first lower pipe section (29) so that the pipe section (29) is held at a vertical spacing from the stand (13).

2. Assembly system according to Claim 1, characterized in that said cable drums (2) may be actuated by hand.

3. Assembly system according to Claim 1, characterized in that said cable drums (2) are coupled to one another with respect to their direction of rotation.

4. Assembly system according to one of Claims 1 to 3, characterized in that said holding frame (4) has a base plate (22) on which there are secured two parallel-opposed upwardly extending webs (23) which bear a holding ring (21) on which said first pipe section (29) bears.

5. Assembly system according to Claim 4, characterized in that said first pipe section (29) has running peripherally on its outer surface a bead or flange (7) by means of which said first pipe section (29) bears on said holding ring (21).

6. Assembly system according to Claim 5, characterized in that there is arranged between said bead (7) and said holding ring (21) an O ring (8).

7. Assembly system according to Claim 4, characterized in that there is secured on said first pipe section (29) a clamp by means of which said first pipe section bears on said holding ring (21).

8. Assembly system according to one of Claims 4 to 7, characterized in that both said webs (23) as well as said base plate (27) and said holding ring (21) are spaced such that a pipe elbow (18) or a T-shaped pipe piece may be attached to the lower end of said first pipe section (29).

9. Assembly system according to one of Claims 4 to 8, characterized in that there is arranged on said base plate (22) a pin (12) which engages in the stand (13).

10. Assembly system according to one of Claims 4 to 9, characterized in that said securing means between holding frame (4) and raising and lowering device (1) are tension screws (6) which are connected to the cables or belts (5).

**Revendications**

1. Système de montage pour la mise en place et le démontage d'un système de tubes d'évacuation de gaz brûlés en verte, céramique, acier spécial ou matière plastique dans une cheminée existante, comprenant un dispositif de levage (1) pour lever et descendre les tubes d'évacuation des gaz brûlés, qui se place sur la tête de cheminée, et un châssis-support (4) relié au dispositif de levage par des moyens de fixation (6), le dispositif de levage comprenant une plaque de base munie d'une ouverture centrale avec, fixés sur la plaque de base (27) au moyen d'un bâti (26), au moins un tambour (2) pour enrouler et dérouler des câbles ou des sangles (5) ainsi que deux poulies de renvoi (25), caractérisé

en ce que les poulies de renvoi (25) sont montées sur des axes parallèles entre eux et décalés dans l'espace l'un par rapport à l'autre,

en ce que le système de montage comporte un support (13) qui est monté sur le fond de la cheminée (31) et sur lequel le châssis-support (4) est positionné avec possibilité de démontage et de centrage et

et en ce que le châssis-support (4) qui reste dans la cheminée est disposé pour soutenir le premier tronçon (29) inférieur de tube de telle sorte que le tronçon (29) de tube soit maintenu à distance verticale du support (13).

2. Système de montage selon la revendication 1, caractérisé en ce que les tambours à câbles

(2) sont actionnés manuellement.

3. Système de montage selon la revendication 1, caractérisé en ce que les tambours à câbles (2) sont couplés entre eux en ce qui concerne leur sens de rotation.

4. Système de montage selon l'une des revendications 1 à 3, caractérisé en ce que le châssis-support (4) comporte une plaque de base (22) sur laquelle sont fixés deux montants (23) parallèles, disposés face à face et s'étendant vers le haut qui portent une collier-support (21) dans lequel repose ledit premier tronçon de tube (29).

5. Système de montage selon la revendication 4, caractérisé en ce que le premier tronçon de tube (29) présente sur sa surface extérieure un bourrelet ou collet (7) circulaire par l'intermédiaire duquel ledit premier tronçon de tube (29) repose sur ledit collier-support (21).

6. Système de montage selon la revendication 5, caractérisé en ce qu'une bague torique (8) est placée entre ledit bourrelet (7) et ledit collier-support (21).

7. Système de montage selon la revendication 4, caractérisé en ce qu'un collier est fixé sur ledit premier tronçon de tube (29), collier par l'intermédiaire duquel le premier tronçon de tube repose sur ledit collier-support (21).

8. Système de montage selon l'une des revendications 4 à 7, caractérisé en ce que les montants (23), la plaque de base (27) et le collier-support (21) sont disposés à une distance telle qu'un coude (18) ou un té peut être monté à l'extrémité inférieure dudit premier tronçon de tube (29).

9. Système de montage selon l'une des revendications 4 à 8, caractérisé en ce qu'une tige (12) qui s'engage dans le support (13) est monté sur la plaque de base (22).

10. Système de montage selon l'une des revendications 4 à 9, caractérisé en ce que les moyens de fixation entre le châssis-support (4) et le dispositif de levage (1) sont des tirants (6) qui sont reliés aux câbles ou aux sangles (5).

# Fig. 1

# Fig. 2

EP 0 289 783 B2

# Fig. 3

9

Fig. 4

EP 0 289 783 B2

Fig. 5

11